# EUROPÄISCHE PATENTSCHRIFT

(11) **EP 3 133 945 B1**
(45) Veröffentlichungstag und Bekanntmachung des Hinweises auf die Patenterteilung: **17.10.2018**
(21) Anmeldenummer: 15713147.5
(22) Anmeldetag: 20.03.2015
(51) Int. Cl.: A41D 27/06

(54) **THERMISCH FIXIERBARES FLÄCHENGEBILDE UND VERFAHREN ZU SEINER HERSTELLUNG**
THERMALLY FUSIBLE SHEETLIKE STRUCTURE AND METHOD FOR PRODUCTION THEREOF
STRUCTURE PLANE FIXABLE THERMIQUEMENT ET PROCÉDÉ POUR LA PRODUCTION DE LADITE STRUCTURE

(30) Priorität: 24.04.2014 DE 102014005819
(43) Veröffentlichungstag der Anmeldung: 01.03.2017
(73) Patentinhaber: Carl Freudenberg KG, 69469 Weinheim (DE)
(72) Erfinder: TRASER, Steffen, 64291 Darmstadt (DE); KREMSER, Steffen, 68542 Heddesheim (DE)
(86) Internationale Anmeldenummer: PCT/EP2015/055880
(87) Internationale Veröffentlichungsnummer: WO 2015/161964

(56) Entgegenhaltungen:
- WO-A1-2013/167250
- DE-A1-102005 006 470

## Beschreibung

Die Erfindung betrifft thermisch fixierbare Flächengebilde, insbesondere verwendbar als fixierbare Einlage- oder Futterstoffe in der Textilindustrie, die sich durch verbesserte anwendungstechnische Eigenschaften und durch verbesserte Verarbeitbarkeit auszeichnen, sowie deren Herstellung und Verwendung als Einlagen für Textilien. Dokument WO2013/167250 offenbart ein thermisch fixierbares Flächengebilde. Einlagestoffe sind das unsichtbare Gerüst der Bekleidung. Sie sorgen für korrekte Passformen und optimalen Tragekomfort. Je nach Anwendung unterstützen sie die Verarbeitbarkeit, erhöhen die Funktionalität und stabilisieren die Bekleidung. Neben der Bekleidung können sie diese Funktionen in technischen Textilanwendungen, wie z.B. der Möbel-, Polstersowie Heimtextilien-Industrie Anwendung übernehmen.

Wichtige Eigenschaftsprofile für Einlagestoffe sind Weichheit, Sprungelastizität, Griff, Wasch- und Pflegebeständigkeit sowie ausreichende Abriebbeständigkeit des Trägermaterials im Gebrauch. Von Vorteil ist ferner, wenn die Einlagestoffe eine gute und dauerhafte Waschbeständigkeit, möglichst bei hohen Temperaturen, zeigen und anspruchsvolle Nachbehandlungsschritte, wie beispielsweise Trocknungsbedingungen bei hohen Zyklenzahlen und/oder den so genannten "Frostprozess" überstehen. Der Frostprozess ist ein Färbeprozess zum Erzeugen eines unregelmäßigen Farbenmusters und ist beispielsweise beschrieben in der WO 2007/088115 A1. In diesem Verfahren werden die zu färbenden textilen Produkte zusammen mit Granalien, die mit einer inertisierenden Flüssigkeit imprägniert sind, gefärbt. Der Frostprozess beansprucht die behandelten Stoffe sehr stark.

Einlagestoffe können aus Vliesstoffen, Geweben, Gewirken oder vergleichbaren textilen Flächengebilden bestehen, die meist zusätzlich mit einer Haftmasse versehen sind, wodurch die Einlage mit einem Oberstoff meist thermisch durch Hitze und/oder Druck verklebt werden kann (Fixiereinlage). Die Einlage wird somit auf einen Oberstoff laminiert. Die genannten verschiedenen textilen Flächengebilde haben je nach Herstellungsverfahren unterschiedliche Eigenschaftsprofile. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus zu einem Faserflor abgelegten Einzelfasern, die mechanisch, chemisch oder thermisch gebunden werden.

Bei mechanisch gebundenen Vliesstoffen wird das Faserflor durch mechanisches Verschlingen der Fasern verfestigt. Hierzu verwendet man entweder eine Nadeltechnik oder ein Verschlingen mittels Wasser- bzw. Dampfstrahlen. Die Vernadelung ergibt weiche Produkte. Allerdings ist man in der mechanischen Vernadelung üblicherweise auf ein Flächengewicht > 50 g/m² angewiesen, was für eine Vielzahl an Einlagestoffanwendungen zu schwer ist. Mit Wasserstrahlen verfestigte Vliesstoffe lassen sich dagegen in niedrigeren Flächengewichten darstellen.

Bei chemisch gebundenen Vliesstoffen wird der Faserflor durch Imprägnieren, Besprühen oder mittels sonst üblicher Auftragsmethoden mit einem Bindemittel (z.B. Acrylatbinder) versehen und anschließend kondensiert. Das Bindemittel bindet die Fasern untereinander zu einem Vliesstoff.

Thermisch gebundene Vliesstoffe werden zur Verwendung als Einlagestoffe üblicherweise kalander- oder durch Heißluft verfestigt. Bei Einlagevliesstoffen hat sich heutzutage die punktförmige Kalanderverfestigung als Standardtechnologie durchgesetzt. Das Faserflor besteht dabei in der Regel aus speziell für diesen Prozess entwickelten Fasern aus Polyester oder Polyamid und wird mittels eines Kalanders bei Temperaturen um den Schmelzpunkt der Faser verfestigt, wobei eine Walze des Kalanders mit einer Punktgravur versehen ist. Solch eine Punktgravur besteht z.B. aus 64 Punkten/cm² und kann z.B. eine Verschweißfläche von 12% besitzen. Ohne eine Punktanordnung würde der Einlagestoff flächenartig verfestigt und ungeeignet hart im Griff sein.

Die oben beschriebenen unterschiedlichen Verfahren zur Herstellung von textilen Flächengebilden sind bekannt und in Fachbüchern und in der Patentliteratur beschrieben.

Die Haftmassen, welche üblicherweise auf Einlagestoffe aufgebracht sind, sind meist thermisch aktivierbar und enthalten in der Regel thermoplastische Polymere. Die Technologie zum Aufbringen dieser Haftmassenbeschichtungen erfolgt nach dem Stand der Technik in einem separaten Arbeitsschritt auf das Faserflächengebilde. Als Haftmassentechnologie sind üblicherweise Pulverpunkt-, Pastendruck-, Doppelpunkt-, Streu- und Hotmeltverfahren bekannt und in der Patentliteratur beschrieben. Als am leistungsfähigsten hinsichtlich Verklebung mit dem Oberstoff auch nach Pflegebehandlung und in Bezug auf die Rückvernietung wird heute die Doppelpunktbeschichtung angesehen.

Ein solcher Doppelpunkt weist einen zweischichtigen Aufbau auf. Er besteht aus einem Unter- und einem Oberpunkt. Der Unterpunkt dringt in das Basismaterial ein und dient als Sperrschicht gegen Haftmassenrückschlag und zur Verankerung der Oberpunktpartikel. Übliche Unterpunkte bestehen beispielsweise aus Bindemittel und/oder aus einem thermoplastischen Polymeren, das bei der Fixierung zur Klebkraft mit beiträgt. Je nach eingesetzter Chemie trägt der Unterpunkt neben der Verankerung im Basismaterial auch als Sperrschicht zur Verhinderung des Haftmassenrückschlages bei. Hauptklebekomponente im zweischichtigen Verbund ist primär der Oberpunkt. Dieser kann aus einem thermoplastischen Material bestehen, welches als Pulver auf den Unterpunkt aufgestreut wird. Nach dem Streuvorgang wird der überschüssige Teil des Pulvers (zwischen den Punkten der unteren Schicht) zweckmäßigerweise wieder abgesaugt. Nach anschließendem Sintern ist der Oberpunkt auf dem Unterpunkt (thermisch) gebunden und kann als Klebstoff zum Oberpunkt dienen.

Je nach Einsatzzweck des Einlagestoffes werden eine unterschiedliche Anzahl an Punkten aufgedruckt und/oder die Haftmassenmenge oder die Geometrie des Punktmusters variiert. Eine typische Punktanzahl sind z.B. CP 110 bei einer Auflage von 9 g/m² bzw. CP 52 mit einer Auflagemenge von 11 g/m².

Weit verbreitet ist auch Pulverbeschichtung und der Pastendruck. Beim Pastendruck wird eine wässrige Dispersion aus thermoplastischen Polymeren, üblicherweise in Partikelform mit einer Partikelgröße < 80 µm, Verdickern und Laufhilfsmitteln hergestellt und dann pastös mittels eines Rotationssiebdruckverfahrens auf die Trägerlage meist punktförmig aufgedruckt. Anschließend wird die bedruckte Trägerlage zweckmäßigerweise einem Trocknungsprozess unterzogen.

Es ist bekannt, dass für Einlage- oder Futterstoffe als Haftmedien für die Heißverklebung verschiedenste Schmelzklebstoffe eingesetzt werden können.

Schmelzklebstoffe, auch Heißklebestoffe, Heißkleber oder im Englischen Hotmelts genannt, sind seit langem bekannt. Allgemein versteht man unter ihnen im wesentlichen lösungsmittelfreie Produkte, die im geschmolzenen Zustand auf eine Klebefläche aufgetragen werden, rasch beim Abkühlen erstarren und damit schnell Festigkeit aufbauen. Im Regelfall werden thermoplastische Polymere, wie Polyamide (PA), Copolyamide, Polyester (PES), Copolyester, Ethylvinylacetat (EVA) und dessen Copolymere (EVAC), Polyethylen (PE), Polypropylen (PP), amorphe Polyalphaolefine (APAO), Polyurethane (PU), etc. als Schmelzklebstoffe verwendet.

Die Klebewirkung der Schmelzklebstoffe basiert grundsätzlich darauf, dass sie sich als thermoplastische Polymere reversibel aufschmelzen lassen und als flüssige Schmelze aufgrund ihrer durch den Schmelzvorgang erniedrigten Viskosität in der Lage sind, die zu klebende Fläche zu benetzen und dadurch eine Adhäsion zu ihr auszubilden. Als Folge der anschließenden Abkühlung erstarrt der Schmelzklebstoff wieder zum Festkörper, der eine hohe Kohäsion besitzt und auf diese Weise die Verbindung zur Klebefläche herstellt. Nachdem die Klebung stattgefunden hat, sorgen die viskoelastischen Polymere dafür, dass die Adhäsion auch nach dem Abkühlvorgang mit ihren Volumenänderungen und dem damit verbundenen Aufbau mechanischer Spannungen erhalten bleibt. Die aufgebaute Kohäsion vermittelt die Bindekräfte zwischen den Substraten.

Bedingt durch den unterschiedlichen molekularen Aufbau der Polymeren unterscheiden sich diese in ihren physikalischen und chemischen Eigenschaften wie z.B. Schmelzpunkt, Viskosität und Stabilität gegen Lösemittel wie Waschlaugen und chemischen Reinigungsmitteln. Wobei diese Größen eine entscheidende Rolle spielen bei der Auswahl des Polymeren für das Einsatzgebiet der Einlage.

So wird beispielsweise für den Bereich der Hemdeneinlagen, die Waschbedingungen bis 95°C bestehen müssen, typischerweise Polyethylen hoher Dichte (nachstehend aus "HDPE" genannt) als Schmelzklebstoff eingesetzt. Dieses Polymer weist einen hohen Schmelzbereich z.B. von etwa 130°C und einen niedrigen MFI-Wert (Schmelzindex oder melt-flow-index) von 2-20 g/10 Minuten (190°C /2,16 kg Belastung) auf. Nachteilig dabei ist, dass durch den hohen Schmelzbereich und die hohe Viskosität (entsprechend einem niedrigen MFI-Wert) des Polymeren Fixiertemperaturen größer 140°C notwendig sind. Bei den Trocknungsprozessen z.B. im Tunnelfinischer tritt Blasenbildung und Delamination der verklebten Lagen auf. Die hohe mechanische Beanspruchung durch die stark bewegte, heiße Luft und der Dampfzusatz sind extrem beanspruchend für die aufgetragene Schmelzkleberbeschichtung. Außerdem sind zum Erzielen einer ausreichenden Haftwirkung sehr große Mengen des HDPE notwendig.

Speziell für den Einsatz im hochwaschbeständigen und bei hohen Bedingungen zu trocknenden Anwendungen sind die heute auf dem Markt erhältlichen Schmelzkleberpolymere nicht ausreichend geeignet.

Copolyamide, Copolyester, Polyethylen geringer Dichte (LDPE) im Schmelzbereich von 100 - 125°C mit MFI-Werten von 2 - 70g/10 Minuten (140°C/2,16 kg Belastung) ergeben keine akzeptablen Trennkraftwerte nach mehrmaligen Pflegebehandlungen.

Aus der DE 10 2005 06 470 A1 ist ein textiles Flächengebilde mit einer Beschichtung aus zwei übereinanderliegenden Schichten aus thermoplastischen Schmelzklebstoffen unterschiedlicher Zusammensetzung bekannt, wobei der auf dem ersten Schmelzklebstoff aufgetragene zweite Schmelzklebstoff einen Schmelzpunkt > 135°C und einen Melt-Flow-Index (MFI)-Wert von 50 bis 250 g/10 Minuten (190°C /2,16 kg) aufweist. In den Beispielen wird als Streupulver für den Oberpunkt ein Polyurethanpulver mit Schmelzbereich 145 - 155°C sowie ein Polypropylen mit einem Schmelzpunkt von 160°C beschrieben. Nachteilig an der Verwendung von Schmelzklebstoffen mit einem so hohen Schmelzpunkt als Oberpunkt ist, dass die zum Fixieren eingesetzten Pressen sehr hoch erhitzt werden müssen. Beispielsweise wird ein Schmelzklebstoff mit einem Schmelzpunkt von 145°C bei über 165°C fixiert. Dies bedeutet, dass die Verwendung von herkömmlichen Fixierpressen, die auf Fixiertemperaturen im Bereich von 120-140°C ausgelegt sind nur schwer möglich ist. Dazu kommt, dass viele Oberstoffe zu empfindlich sind, um bei so hohen Fixiertemperaturen beschichtet werden zu können.

Ausgehend von diesem Stand der Technik ist es Aufgabe der vorliegenden Erfindung, mit Schmelzklebern ausgerüstete textile Flächengebilde bereitzustellen, die mit üblichen Fixierpressen bei Temperaturen unterhalb 165 °C problemlos verarbeitet werden können und die eine sehr gute und dauerhafte Waschbeständigkeit bis 95°C zeigen und die extreme Nachbehandlungsschritte, wie beispielsweise Trocknungsbedingungen bei hohen Zyklenzahlen und/oder den "Frostprozess" überstehen.

Diese Aufgabe wird erfindungsgemäß gelöst durch ein thermisch fixierbares Flächengebilde, insbesondere verwendbar als fixierbarer Einlagestoff in der Textilindustrie mit einer Trägerlage aus einem textilen Material, auf welcher eine zweilagige Haftmassenstruktur, umfassend eine unmittelbar auf dem Flächengebilde aufliegende Unterschicht sowie eine auf der Unterschicht angeordnete Oberschicht aufgebracht ist, wobei die Unterschicht einen ersten Schmelzklebstoff enthält und die Oberschicht einen zweiten Schmelzklebstoff, wobei der erste Schmelzklebstoff einen Schmelzpunkt > 140°C und einen Melt-Flow-Index (MFI)-Wert von> 50 g/10 Minuten (190°C /2,16 kg) aufweist und der zweite Schmelzklebstoff einen Schmelzpunkt < 145°C und einen MFI-Wert von< 50 g/10 Minuten (190°C /2,16 kg) aufweist.

Das erfindungsgemäße Flächengebilde zeichnet sich durch eine spezielle zweilagige Haftmassenstruktur aus, in der eine relativ niedrig schmelzende und hochviskose Oberschicht mit einer hochschmelzenden und niedrig viskosen Unterschicht kombiniert wird.

Aufgrund des niedrigen Schmelzpunkts der Oberschicht kann die Fixierung bei vergleichsweise niedrigen Temperaturen, beispielsweise unterhalb 165°C, vorzugsweise von 140°C bis 160°C durchgeführt werden, was die Verwendung temperatursensibler Oberstoffen ermöglicht. Weiter vorteilhaft ist, dass die Einstellung niedrigerer Fixiertemperaturen Kosten und Ressourcen spart und zudem herkömmliche Fixierpressen eingesetzt werden können.

Gemäß einer bevorzugten Ausführungsform der Erfindung weist der zur Ausbildung der Oberschicht eingesetzte zweite Schmelzklebstoff einen Schmelzpunkt von 90°C bis 145°C, noch bevorzugter von 110°C bis 145 °C, und insbesondere von 120°C bis 140 °C auf.

Gemäß einer weiteren bevorzugten Ausführungsform der Erfindung weist der zur Ausbildung der Oberschicht eingesetzte zweite Schmelzklebstoff einen MFI-Wert von 2 bis 50 g/10 Minuten (190°C /2,16 kg), noch bevorzugter von 2 bis 45 g/10 Minuten (190°C /2,16 kg) und insbesondere von 3 bis 40 g/10 Minuten (190°C /2,16 kg) auf.

Praktische Versuche haben ergeben, dass besonders gute Ergebnisse erzielt werden, wenn der zur Ausbildung der Oberschicht eingesetzte zweite Schmelzklebstoff einen Schmelzpunkt von 110 °C bis 145 °C in Kombination mit einen MFI-Wert von 2 bis 45 g/10 Minuten (190°C /2,16 kg) aufweist.

Darüber hinaus wurde überraschend gefunden, dass das erfindungsgemäße Flächengebilde sich durch eine hohe Trennkraft, gemessen nach DIN 54310 von vorzugsweise 5 N/5cm bis 50 N/5cm, noch bevorzugter von 10 N/5cm bis 40 N/5cm, und insbesondere von 10 N/5cm bis 30 N/5cm auszeichnet, die auch nach anspruchsvollen Nachbehandlungsschritten, wie beispielsweise einer Färbung mit dem Frostverfahren oder bei der Verwendung als Mietwäsche aufrechterhalten werden kann. Ohne sich erfindungsgemäß auf einen Mechanismus festzulegen, wird vermutet, dass die hohe Trennkraft durch die spezielle Abstimmung der Schmelzpunkte und MFI-Werte der Schmelzklebstoffe von Ober- und Unterschicht zustande kommt, die zu einer guten Anbindung von Ober- und Unterschicht führt.

Im Falle der erfindungsgemäß bevorzugten Ausführungsform der Haftmassenstruktur als Doppelpunkt-Haftmassenstruktur kommt dazu, dass die Unterpunkte aufgrund ihrer vergleichsweise hohen MFI-Werte zur Verklebung beitragen können, indem sie an den Randstellen um die Oberpunkte fließen.

Weiter vorteilhaft ist, dass die erfindungsgemäßen Flächengebilde vorteilhafter Weise mindestens 25, vorzugsweise mindestens 50 Zyklen die Prüfbedingungen nach ISO 15797:2004" "Industrielle Wasch und Finishverfahren zur Prüfung von Arbeitskleidung und/oder Waschbehandlungen bis 95°C bestehen, sowie im Einsatz keinen "color pick up" zeigen.

Darüber hinaus bietet der niedrige MFI-Wert der Oberschicht den Vorteil, dass ein Schmelzklebstoffdurchschlag durch den Oberstoff und Rückvernietung bei Sandwichfixierung zwischen den Lagen vermieden werden kann.

Gemäß einer bevorzugten Ausführungsform der Erfindung ist die Haftmassenstruktur als Doppelpunktbeschichtung ausgebildet.

Als Schmelzklebstoff für die Ober- und/oder Unterschicht werden Kleber bevorzugt auf Polyolefinbasis mit den oben definierten Bereichen von Schmelzpunkten und Schmelzindizes (MFI-Werte) eingesetzt. Unter Schmelzindex ist im Rahmen dieser Beschreibung der MFI-Wert, ermittelt nach DIN 53735: 1980-10 oder ISO 1133 zu verstehen.

Der Begriff Polyolefin umfasst neben von alpha-Olefinen, vorzugsweise von Propylen oder Ethylen, abgeleiteten Homopolymeren auch Copolymere, die neben von einem alpha-Olefin abgeleiteten Struktureinheiten auch von anderen ethylenisch ungesättigten Kohlenwasserstoffen, beispielsweise von weiteren alpha-Olefinen und/oder von Vinylaromaten, wie Styrol, abgeleitete Struktureinheiten enthalten.

Beispiele für alpha-Olefine sind Ethylen, Prop-1-en, But-1-en, Pent-1-en, Hex-1-en, Oct-1-en oder Dec-1-en.

Es können alle an sich bekannten Polyolefin-Typen eingesetzt werden. Beispiele dafür sind Polyolefine, die nach dem Ziegler-Natta-Verfahren oder unter Einsatz von Metallocen-Katalysatoren hergestellt worden sind.

Beispiele für bevorzugt eingesetzte Polyolefine sind Polyethylene, Polypropylene oder Copolymere abgeleitet von Ethylen und Propylen. Weitere Beispiele sind Copolymere abgeleitet von Ethylen oder von Propylen mit weiteren alpha-Olefinen höherer Kohlenstoffzahl, wie But-1-en, Pent-1-en, Hex-1-en, Oct-1-en oder Dec-1-en.

Eine oder beide Schichten des Schmelzklebstoffs können neben dem jeweiligen Polyolefin(gemisch) noch ein modifiziertes Polyolefin enthalten. Darunter ist ein Copolymer zu verstehen, das von mindestens einem alpha-Olefin, und einer ethylenisch ungesättigten Säure oder deren Anhydrid oder einer ethylenisch ungesättigten Epoxidverbindung oder einem Gemisch zweier oder mehrerer dieser Comonomeren abgeleitet ist. Dabei kann die Modifikation auf beliebige Weise erfolgt sein, beispielsweise als Copolymerisation von alpha-Olefin Monomer(en) zusammen mit ausgewähltem Comonomer(en) und/oder als Pfropfung von ausgewählten polaren Comonomer(en) auf ein Polyolefin.

Beispiele für alpha-Olefine oder andere olefinisch ungesättigte Kohlenwasserstoffe, die zur Herstellung dieser Gruppe von Copolymeren einzeln oder in Kombination miteinander eingesetzt worden sind, wurden bereits weiter oben bei der Beschreibung der Herstellung der Homo- oder Copolymeren abgeleitet von einem oder mehreren alpha-Olefinen aufgezählt.

Bevorzugt setzt man in der Gruppe der modifizierten Polyolefine Polypropylene oder insbesondere Polyethylene oder Copolymere abgeleitet von Ethylen und Acrylsäure- und/oder Methacrylsäureestern, insbesondere den Alkylestern, ein.

Gemäß einer bevorzugten Ausführung der Erfindung enthält die Oberschicht Ethylen, Prop-1-en, But-1-en, Pent-1-en, Hex-1-en, Oct-1-en Dec-1-en oder Gemische oder Copolymere hiervon, mit einem Schmelzpunkt von 110 °C bis 145 °C und einem MFI von 2 bis 45 g/10 Minuten (190°C /2,16 kg) als Hauptkomponente, das heißt in einer Menge von mindestens 50 Gew.%, beispielsweise von 50-100 Gew.%, oder von 60-100 Gew.%, oder von 70-100 Gew.%, oder von 80-100 Gew.%, oder von 90-100 Gew.%, oder von 100 Gew.%.

Denkbar ist auch, dass die Oberschicht und/oder die Unterschicht alternativ oder zusätzlich zu dem Polyolefin noch weitere thermoplastische Polymere enthalten. Die von dem Polyolefin verschiedenen thermoplastischen Polymere können beispielsweise (Co)-Polyester-, (Co)-Polyamid-, Ethylenvinylacetat-, und/oder Polyurethan basierende Polymere und/oder Kombinationen (Gemische und Copolymerisate) der genannten Polymere umfassen und in einem Beschichtungsgewicht von 0,1 bis 30 g/m² vorliegen.

Gemäß einer bevorzugten Ausführung der Erfindung enthält die Oberschicht den Schmelzklebstoff in einer Menge von 0,1 bis 30 g/m², vorzugsweise von 2 bis 25 g/m². Die Unterschicht enthält den Schmelzklebstoff vorzugsweise in einer Menge von 0,1 bis 20 g/m², noch bevorzugter von 2 bis 15 g/m² und insbesondere von 5 bis 15 g/m². Gemäß einer besonders bevorzugten Ausführungsform der Erfindung enthalten sowohl Oberschicht als auch Unterschicht den Schmelzklebstoff in einer Menge von vorzugsweise 2 bis 15 g/m².

Die erfindungsgemäß eingesetzten Schmelzklebstoffe können auch weitere an sich übliche Hilfsstoffe enthalten. Diese werden in Abhängigkeit des gewünschten Eigenschaftsprofils und der Aufbringungs- und Verarbeitungsweise des Schmelzklebstoffs zugesetzt. Beispiele für solche Zusätze sind Emulgatoren, Verdicker, Pigmente und Verarbeitungshilfsmittel.

Wie oben erläutert, eignet sich Polypropylen, vorzugsweise in einer Menge von mindestens 0,1 bis 30 g/m², vorzugsweise von 2 bis 15 g/m², bezogen auf die Gesamtmenge der Oberschicht, mit einem Schmelzpunkt von 125 °C bis 145 °C, besonders gut zur Ausbildung der Oberschicht. Erfindungsgemäß besonders bevorzugt besteht der zweite Schmelzklebstoff aus Polyolefinen. Als ebenfalls geeignet haben sich Polyurethane, Polyester und/oder Polyamid als Hauptkomponente erwiesen.

Denkbar ist ferner, dass das Polyolefin in der Oberschicht beispielsweise mit den gängigen Thermoplasten abgemischt wird. Als besonders geeignet haben sich Polyamid (PA), Polyester (PES), Ethylenvinylacetat, Polyurethan und deren Copolymere, etc. erwiesen. Das Polyolefin kann auch mit den weiteren Thermoplasten zusammen extrudiert werden (Compound).

Sehr gute Ergebnisse wurden auch mit der Verwendung von Polyolefin erzielt, welches in Abmischung ein Polyolefincopolymer, vorzugsweise mit einem Schmelzpunkt von 90°C bis 145°C und einem MFI von 10 bis 160 g/10 Minuten (190°C /2,16 kg), vorzugsweise von 20 bis 80 g/10 Minuten (190°C /2,16 kg) in einer Menge von 2-98 Gew.%, vorzugsweise von 2-50 Gew.%, bezogen auf die Gesamtmenge an Polyolefin in der Oberschicht aufweist.

Gemäß einer bevorzugten Ausführungsform der Erfindung weist das zur Ausbildung der Oberschicht eingesetzte Polyolefin in Abmischung mit dem Polyolefincopolymer, einen Schmelzpunkt von 110°C bis 145 °C, vorzugsweise von 120°C bis 140 °C und einen MFI-Wert von 3 bis 45 g/10 Minuten, vorzugsweise von 5 bis 35 g/10 Minuten (190°C /2,16 kg) auf.

Gemäß einer weiteren bevorzugten Ausführungsform der Erfindung beträgt die Differenz zwischen den Schmelzpunkten des ersten und des zweiten Schmelzklebstoffs von 5 bis 50°C, noch bevorzugter von 5 bis 20°C, und insbesondere von 5 bis 10°C und/oder die Differenz zwischen den MFI des ersten und des zweiten Schmelzklebstoffs von 5 bis 150 g/10 Minuten (190°C /2,16 kg), noch bevorzugter von 20 bis 120 g/10 Minuten (190°C /2,16 kg).

Der zur Ausbildung der Unterschicht eingesetzte erste Schmelzklebstoff weist vorzugsweise einen Schmelzpunkt von 140°C bis 200°C, noch bevorzugter von 150°C bis 170°C und/oder einen MFI im Bereich von 51 g/10 Minuten (190°C /2,16 kg) bis 160 g/10 Minuten (190°C /2,16 kg), noch bevorzugter von 80 g/10 Minuten (190°C /2,16 kg) bis 130 g/10 Minuten (190°C /2,16 kg) auf.

Wie oben erläutert, sind auch zur Ausbildung der Unterschicht Polyolefine, und dabei insbesondere Polypropylen, vorzugsweise in einer Menge von 0,1 bis 20 g/m², vorzugsweise von 2 bis 15 g/m² besonders gut geeignet. Erfindungsgemäß besonders bevorzugt besteht der erste Schmelzklebstoff aus Polyolefinen. Als ebenfalls geeignet haben sich Polyurethane, Polyester und/oder Polyamid gegebenenfalls in Kombination mit Polyolefinen erwiesen.

Somit enthält die Unterschicht vorzugsweise thermoplastische Polymere, die bei der Fixierung mit zur Verklebung beitragen können. Durch die Verwendung von Polyolefinen in der Unterschicht erhält man eine sehr gute Anbindung der Oberschicht und kann somit sowohl die Trennkraft erhöhen als auch das Puderrieseln reduzieren. Vorteilhaft gegenüber z.B. Polyamiden ist eine stark verbesserte Verankerung zum Oberpunkt. Darüber hinaus wird die Klebkraft auf beschichteten Oberstoffen unterstützt.

Auch beim Unterpunkt sind die verschiedensten Kombinationen möglich. So können Kombinationen von Polyolefinen mit gängigen Thermoplasten (PA/PES/Polyolefine, Ethylenvinylacetat, Copolymere etc.) als auch mit gängigen Bindern (Acrylatdispersionen, Silikondispersionen etc.) eingesetzt werden.

In einer bevorzugten Ausführungsform enthält die Unterschicht 50 bis 100 Gew.% Polypropylen, vorzugsweise 60 bis 90 Gew.% Polypropylen und insbesondere 70 bis 80 Gew.%. Die auf der Unterschicht liegende Oberschicht enthält vorzugsweise ein Polypropylen, das einen niedrigeren Schmelzfluss hat als das eingesetzte Polymer in der Unterschicht.

Zusätzlich zu dem ersten Schmelzklebstoff kann die Unterschicht auch ein Bindemittel enthalten. Dabei kann das Bindemittel ein physikalisch vernetzendes Bindemittel und/oder ein chemisch vernetzendes Bindemittel sein. Bevorzugt ist das Bindemittel ein Bindemittel des Acrylat- Styrolacrylat-, Ethylen-Vinylacetat,- Butadien-Acrylat, SBR-, NBR- und/oder Polyurethan-Typs oder ein Gemisch aus den oben genannten Substanzen. Vorzugsweise ist das Bindemittel in der Unterschicht in einer Menge von 5 Gew.% bis 70 Gew.% enthalten.

Sofern es sich bei dem Bindemittel um ein Polyurethan handelt, versteht man in diesem Fall unter einem Polyurethan-Bindemittel ein Polymer mit einem Schmelzpunkt > 190 °C, welches bei der Fixierung nicht zur Klebkraft beiträgt. Derartige doppelschichtige Haftmassen zeichnen sich durch einen geringen Haftmassenrückschlag aus, da die zuerst aufgebrachte Bindemittel enthaltende Schicht als Sperrschicht wirkt. Mischt man der Unterschicht ein thermoplastisches Polymer mit einen Schmelzpunkt < 190 °C bei, so trägt dieses neben der Oberschicht zur Verklebung mit bei.

Für das Bindemittel sind Polyesterpolyurethane, vorzugsweise aliphatische Polyesterpolyurethane, zu bevorzugen, da sie eine ausgezeichnete Filmbildungseigenschaft haben und eine gute physikalische Wechselwirkung miteinander eingehen (filmbildend). Durch eine chemische Quervernetzung kann man den Wiederstand gegen Rückvernietung noch erhöhen. Dies ist dann vorteilhaft, wenn Flexibilität und Elastizität weniger von Relevanz sind. Der Vorteil gegenüber z. B. Acrylatdispersionen sind die höhere Flexibilität und Elastizität, eine geringere bleibende Dehnung, niedrigere Vernetzungstemperaturen und die bessere Anbindung zur Oberschicht.

Eine Bindemittel enthaltende Unterschicht wird vorzugsweise mittels einer wässrigen Unterpunktdispersionen hergestellt. In einer derartigen Dispersion können des Weiteren noch Hilfsstoffe enthalten sein, die u.a. zur Viskositätseinstellung und zum Laufverhalten der Paste beitragen. Durch eine geeignete Bindemittelzusammensetzung lässt sich die Haptik des Einlagestoffes in einem weiten Rahmen variieren.

Die Unterschicht enthält den Schmelzklebstoff vorzugsweise in einer Menge von 0,1 bis 20 g/m². Gemäß einer besonders bevorzugten Ausführungsform der Erfindung enthalten sowohl Oberschicht als auch Unterschicht Polyolefin in einer Menge von vorzugsweise 2 bis 15 g/m².

Das Verhältnis der Massen des ersten und des zweiten Schmelzklebstoffs kann in Abhängigkeit von den eingesetzten Polymeren und dem beabsichtigten Anwendungszweck variieren. Gute Ergebnisse werden in vielen Fällen erhalten, wenn das Verhältnis der Massen des ersten und des zweiten Schmelzklebstoffs im Bereich von 5:1 bis 1:5, vorzugsweise von 2:1 bis 1:3 beträgt.

Für den Einlagebereich ist es vorteilhaft, wenn der Schmelzklebstoff als Granulat hergestellt wird, das eine gute Vermahlbarkeit aufweist.

Die Größe der beim Vermahlen des Granulat erhaltenen Pulverpartikel orientiert sich dabei vorteilhafter Weise an der zu bedruckenden Fläche, beispielsweise der gewünschten Größe eines Bindungspunktes. Im Falle eines Punktmusters kann der Partikeldurchmesser zwischen >0 µm und 500 µm variieren. Grundsätzlich ist die Partikelgröße des thermoplastischen Pulvers nicht einheitlich, sondern folgt einer Verteilung, d.h. man hat immer ein Partikelgrößenspektrum vorliegen. Die Partikelgröße ist vorteilhafterweise abgestimmt auf die gewünschte Auftragsmenge, Punktgröße und Punktverteilung.

Praktische Versuche haben ergeben, dass die zur Herstellung der Oberschicht eingesetzten Pulverpartikel zweckmäßigerweise Korngrößen im Bereich von >0 bis 400 µm, vorzugsweise von >0 bis 300 µm aufweisen. Erfindungsgemäß besonders bevorzugt werden Pulverpartikel mit einer Korngrößenverteilung, in der der Anteil der Fraktion im Bereich von 0 bis 80 µm von 0 bis 20 Gew.%, vorzugsweise von 5 bis 15 Gew.% beträgt, der Anteil der Fraktion im Bereich von 80 bis 125 µm von 5 bis 30 Gew.%, vorzugsweise von 10 bis 25 Gew.% der Anteil der Fraktion im Bereich von 125 bis 160 µm von 5 bis 35 Gew.%, vorzugsweise von 10 bis 25 Gew.%, der Anteil der Fraktion im Bereich von 160 bis 200 µm von 5 bis 40 Gew.%, vorzugsweise von 10 bis 25 Gew.% und/oder, bevorzugt und, der Anteil der Fraktion im Bereich von über 200 µm von 20 bis 70 Gew.%, vorzugsweise von 30 bis 60 Gew.%.

Die vorgenannte Korngrößenverteilung zeichnet sich dadurch aus, dass sie Anteile sowohl im Bereich der kleinen als auch der großen Korngrößenfraktionen aufweist. Es wird vermutet, dass die vorteilhaften Eigenschaften von Pulverpartikeln mit der vorgenannten Korngrößenverteilung dadurch hervorgerufen werden, dass die Fraktionen mit kleineren Korngrößen eine besonders gleichmäßige Schicht auf dem Unterpunkt ausbilden können, was zu einer besonders guten Verankerung auf dem Unterpunkt führt. Auf dieser Schicht können sich die Fraktionen mit größeren Korngrößen ablagern. Die Lokalisierung dieser eher größeren Partikel auf der Oberfläche hat den Vorteil, dass diese sich besser zum Verbinden mit dem Oberstoff eignen, als kleinere Partikel. Dies liegt zumindest teilweise daran, dass größere Partikel mehr Masse zur Verbindung mit den Oberstoff bereitstellen als kleinere Partikel. Vor diesem Hintergrund ist es besonders bevorzugt Pulverpartikel mit einer Korngrößenverteilung einzusetzen, in der der Anteil der Fraktion im Bereich von 0 bis 80 µm von 0 bis 20 Gew.%, vorzugsweise von 5 bis 15 Gew.% beträgt und der Anteil der Fraktion im Bereich von 160 bis 200 µm von 5 bis 40 Gew.%, vorzugsweise von 10 bis 25 Gew.% und der Anteil der Fraktion im Bereich von über 200 µm von 20 bis 70 Gew.%, vorzugsweise von 30 bis 60 Gew.% beträgt.

Die Bestimmung der Anteile der Fraktionen kann auf herkömmliche Art und Weise, beispielsweise mittels Luftstrahlsiebung, gemäß DIN EN ISO 4610, Oktober 1997, gemessen werden.

Die vermahlenen Pulverpartikel sollten eine möglichst runde Geometrie aufweisen, um ein fehlerfreies Streuen bzw. eine fehlerfreie Einarbeitung und Ansinterung zu gewährleisten.

Die Schmelzkleber können erfindungsgemäß auch mit den anderen gängigen Beschichtungsmethoden im Einlagebereich, wie Pulverpunkt-, Pastendruck-, Doppelpunkt-, Streu-, Hotmeltverfahren, Scattering Coating, etc. eingesetzt werden. Hierzu werden zweckmäßigerweise andere Korngrößenverteilungen oder z.B. eine Pastenformulierung eingesetzt.

Ebenfalls denkbar ist, dass zwischen Schmelzkleber-Oberschicht und Schmelzkleber/Binder-Unterschicht keine klare Phasengrenze zu erkennen ist. Dies kann beispielsweise dadurch bewirkt werden, dass das thermoplastische Polymer in Partikelform im Gemisch mit einem Bindemittel, beispielsweise in Form einer Dispersion, und ggf. noch weiteren Komponenten aufgetragen wird. Nach dem Auftragen wird das Bindemittel von den gröberen Partikeln separiert, wobei die gröberen Partikel mehr auf der Oberseite der Bindungsfläche, beispielsweise der Punktoberfläche, zum Liegen kommen. Das Bindemittel bindet neben seiner Funktion, sich in der Trägerlage zu verankern und diese zusätzlich zu binden, die gröberen Partikel. Gleichzeitig kommt es zu einer teilweisen Trennung von Partikeln und Bindemittel an der Oberfläche der Trägerlage. Das Bindemittel dringt tiefer in das Material ein, während sich die Partikel an der Oberfläche anreichern. Dadurch sind die gröberen Polymerpartikel in der Bindemittelmatrix zwar eingebunden, gleichzeitig steht ihre freie (Ober-)Fläche an der Oberfläche des Vliesstoffs aber zur direkten Verklebung mit dem Oberstoff zur Verfügung. Es kommt zur Ausbildung einer doppelpunktähnlichen Struktur, wobei zur Erzeugung dieser Struktur im Gegensatz zum bekannten Doppelpunktverfahren aber nur ein einziger Verfahrensschritt erforderlich ist und auch das aufwändige Absaugen überschüssigen Pulvers entfällt.

Gemäß einer besonders bevorzugten Ausführungsform der Erfindung liegt die zweilagige Haftmassenstruktur in Form einer Doppelpunktstruktur vor. Dabei wird der Doppelpunkt vorzugsweise auf der Basis einer, vorzugsweise wässrigen, Dispersion als Unterpunkt und einem Streupuder als Oberpunkt in einem Punktmuster auf die Trägerlage aufgebracht. Das Punktmuster kann regulär oder irregulär verteilt sein. Die Bedruckung ist aber keinesfalls auf Punktmuster beschränkt. Die Haftmassenstruktur kann in beliebigen Geometrien aufgebracht werden, z.B. auch in Form von Linien, Streifen, netz- oder gitterartigen Strukturen, Punkten mit rechteckiger, rautenförmiger oder ovaler Geometrie oder dergleichen.

In einer weiteren bevorzugten Ausführungsform wird die auf dem Flächengebilde aufgetragene Unterschicht als vorzugsweise wässrige Dispersion in der Form eines irregulären Punktrasters auf das Flächengebilde aufgetragen. Die darüber liegende Oberschicht kann dabei aus einem Pulver oder einer Pulvermischung bestehen, das/die auf das Flächengebilde aufgetragen wurde(n). An den Stellen, an denen sich die Dispersion befindet, wird das Pulver(gemisch) festgehalten, während es sich an den anderen Stellen von der Oberfläche des Flächengebildes leicht entfernen lässt.

Die Auswahl des für die Trägerlage einzusetzenden textilen Materials erfolgt im Hinblick auf den jeweiligen Anwendungszweck bzw. die besonderen Qualitätsanforderungen. Geeignet sind zum Beispiel Gewebe, Gestricke, Gewirke, Gelege und/oder Vliesstoffe. Durch die Erfindung sind hier prinzipiell keinerlei Grenzen gesetzt. Der Fachmann kann hier leicht die für seine Anwendung geeignete Materialkombination auffinden. Vorzugsweise besteht die Trägerlage aus einem Vliesstoff.

Die erfindungsgemäß mit Haftklebern modifizierten textilen Trägerlagen können nach sämtlichen flächenbildenden Techniken hergestellt werden. Beispiele dafür sind Weben, Legen, Wirken, Stricken oder nasse oder trockene Vliesherstellungsverfahren.

Der Vliesstoff, aber auch die Fäden oder Garne der textilen Materialien können aus Chemiefasern oder aber auch aus Naturfasern bestehen. Als Chemiefasern kommen vorzugsweise Polyester-, Polyamid-, Celluloseregenerat- und/oder Bindefasern zum Einsatz, als Naturfasern Wolle- oder Baumwollfasern.

Die Chemiefasern können hierbei kräuselbar, gekräuselte und/oder ungekräuselte Stapelfasern, kräuselbare, gekräuselte und/oder ungekräuselte, direkt gesponnene Endlosfasern und/oder endliche Fasern, wie Meltblown-Fasern, umfassen. Die Trägerlage kann ein- oder mehrlagig aufgebaut sein.

Für die Herstellung des Vliesstoffs können die eingangs dargestellten Technologien eingesetzt werden. Das Verbinden der Fasern des Faserflors zu einem Vliesstoff kann hierbei mechanisch (konventionelles Vernadeln, Wasserstrahltechnik), mittels eines Bindemittels oder thermisch erfolgen. Hierbei reicht allerdings eine moderate Vliesstofffestigkeit der Trägerlage vor dem Bedrucken aus, da die Trägerlage beim Bedrucken mit dem Gemisch aus Bindemittel und thermoplastischem Polymer noch zusätzlich mit Bindemittel beaufschlagt und verfestigt wird. Für die moderaten Vliesstofffestigkeiten können auch kostengünstige Faserrohstoffe eingesetzt werden, vorausgesetzt, dass diese die Anforderungen an den Griff erfüllen. Auch kann die Prozessführung vereinfacht werden.

Im Falle der Verwendung von Stapelfasern ist es vorteilhaft, diese mit mindestens einer Krempel zu einem Faserflor zu kardieren. Bevorzugt ist hier eine Wirrlegung (Random-Technologie), doch auch Kombinationen aus Längs- und/oder Querlegung bzw. noch kompliziertere Krempelanordnungen sind möglich, wenn spezielle Vliesstoffeigenschaften ermöglicht werden sollen bzw. wenn mehrlagige Faserstrukturen gewünscht werden.

Besonders geeignet für Einlagestoffe sind Fasern mit einem Fasertiter bis 6,7 dtex. Gröbere Titer werden aufgrund ihrer großen Fasersteifigkeit normalerweise nicht eingesetzt. Bevorzugt sind Fasertiter im Bereich von 1 bis 2 dtex, doch auch Mikrofasern mit einem Titer < 1 dtex sind denkbar.

Erfindungsgemäße textile Flächengebilde können in an sich bekannter Weise verfestigt sein, beispielsweise durch mechanisches oder hydrodynamisches Nadeln, durch Aufschmelzen von im textilen Flächengebilde vorhandenen Bindefasern, durch thermisch-mechanisches Verfestigen und/oder durch Applikation von Bindemitteln.

Typischerweise weisen die erfindungsgemäßen textilen Flächengebilde, insbesondere die Vliesstoffe, Flächengewichte, gemessen nach DIN EN 29073 von 6 bis 500 g/m² auf.

Besonders bevorzugt kommen textile Flächengebilde mit Flächengewichten von 30 bis 200 g/m² zum Einsatz.

Nach der Herstellung des textilen Flächengebildes kann dieses in an sich bekannter Weise bevorzugt nach dem "Doppelpunktverfahren" mit zwei Schichten unterschiedlicher Schmelzklebstoffe versehen werden.

Die Erfindung betrifft auch ein Verfahren zur Herstellung des oben beschriebenen textilen Flächengebildes. Das Verfahren umfasst die Schritte:
a) Herstellung eines textilen Flächengebildes durch eine textile Flächenbildungstechnik,
b) Auftragen einer Schicht eines ersten Schmelzklebstoffs auf das textile Flächengebilde und
c) Auftragen einer Schicht eines zweiten Schmelzklebstoffs auf das textile Flächengebilde, so dass sich eine
d) Schicht aus dem zweiten Schmelzklebstoff über der Schicht des ersten Schmelzklebstoffs ausbildet.

Dabei werden die ersten und zweiten Schmelzklebstoffe gemäß den obigen Definitionen eingesetzt.

Gemäß einer bevorzugten Ausführungsform der Erfindung werden die Schmelzklebstoffschichten in Form von Doppelpunkten aufgetragen.

Die Herstellung der erfindungsgemäß eingesetzten Schmelzklebstoffe kann auf unterschiedlichen an sich bekannten verschiedenen Wegen erfolgen.

Beispiele dafür sind die Vermahlung der Komponenten mit nachheriger Pulvermischung, die Mischung der Komponenten in Granulatform mit anschließender Vermahlung, sowie die Mischung der Komponenten mittels Extrusion gefolgt von anschließender Vermahlung.

Das Auftragen der Schmelzklebstoffe kann ebenfalls nach unterschiedlichen an sich bekannten Verfahren erfolgen.

So kann in einem ersten Schritt eine Paste des ersten Schmelzklebstoffs auf das textile Flächengebilde in Form eines regelmäßigen oder vorzugsweise irregulären Musters aufgetragen werden. Der Auftrag kann dabei durch Siebdruck oder durch Aufbringen durch eine strukturierte Walze erfolgen. In einem zweiten Schritt kann dann ein Pulver aus dem zweiten Schmelzklebstoff auf das textile Flächengebilde aufgestreut werden, das an den Stellen des ersten Schmelzklebstoffs an der Paste kleben bleibt. Von den übrigen Stellen der Oberfläche des textilen Flächengebildes kann das Pulver durch Absaugen entfernt werden. In einer nachfolgenden thermischen Behandlung werden der erste und zweite Schmelzklebstoff als übereinanderliegende Schichten fixiert.

Gemäß einer besonders bevorzugten Ausführungsform der Erfindung erfolgt die Auftragung der Ober- und Unterschicht vorteilhaft in Form der klassischen Doppelpunktbeschichtung. Zur Bildung des Unterpunkts können Bindemittel enthaltende Schmelzklebstoffdispersionen eingesetzt werden. Durch die Verwendung von Bindemitteln kann des Weiteren die Anbindung zum Oberpunkt stark verbessert und dadurch die Trennkraft des Haftmassensystems gesteigert werden. Ein Binder enthaltender Unterpunkt bietet den Vorteil, dass er physikalisch oder chemisch vernetzt werden kann und die Rückvernietung dadurch erheblich reduziert wird.

Gemäß einer bevorzugten Ausführungsform wird der erste Schmelzklebstoff in Form einer wässrigen Schmelzklebstoffdispersion aufgebracht. In den wässrigen Unterpunktdispersionen können des Weiteren noch Hilfsstoffe enthalten sein, die u.a. zur Viskositätseinstellung und zum Laufverhalten der Paste beitragen. Durch eine geeignete Bindemittelzusammensetzung lässt sich die Haptik des Einlagestoffes in einem weiten Rahmen variieren.

Der Feststoffgehalt der Schmelzklebstoffdispersion kann zwischen 10% und 70%, bevorzugt zwischen 15% und 60% und besonders bevorzugt zwischen 20% und 60%, insbesondere zwischen 30% und 50%, liegen.

Gemäß einer bevorzugten Ausführungsform der Erfindung weist die Schmelzklebstoffdispersion bei 20°C eine Viskosität von mindestens 10 000 mPas vorzugsweise von 20 000 mPas bis 60 000 mPas, noch bevorzugter von 35 000 mPas bis 50 000 mPas auf. Vorteilhaft an der Verwendung einer eher höher viskosen Schmelzklebstoffdispersion ist, dass hierdurch erhabene Unterpunkte ausgebildet werden können, die eine besonders große Oberfläche zur Aufnahme des Schmelzklebsstoffs für die Unterpunkte bieten.

Die Stabilisierung der Schmelzklebstoffdispersion kann durch interne und/oder externe anionische, kationische oder neutrale Emulgatoren erfolgen.

Der pH-Wert der Schmelzklebstoffdispersion liegt vorzugsweise im Bereich von 4,0 bis 11,0, noch bevorzugter zwischen 5,0 und 10,0, noch bevorzugter zwischen 6 und 9.

Die erfindungsgemäß modifizierten textilen Flächengebilde lassen sich als Einlage- oder Futterstoffe einsetzen. Die Erfindung betrifft auch Verwendung zu diesen Zwecken, insbesondere als Verfestigungseinlage und/oder als Futterstoff für hohe Beanspruchung in der Pflegebehandlung und/oder für Mietwäsche.

Insbesondere sind die erfindungsgemäßen textilen Flächengebilde zur Verwendung als Verfestigungseinlage oder Verstärkungseinlage von Kragen- und Manschetten von Berufsbekleidung, insbesondere für Mietwäsche, geeignet.

Die erfindungsgemäß modifizierten textilen Flächengebilde können mit einem zu verstärkenden textilen Oberstoff in an sich bekannter Weise verklebt werden.

Erfindungsgemäß können die verschiedensten Oberstoffe eingesetzt werden, beispielsweise PES-, Baumwolle- oder Batist-Oberstoffe.

Der Einsatz eines erfindungsgemäßen thermisch fixierbaren Flächengebildes ist jedoch nicht auf diese Anwendung beschränkt. Auch andere Anwendungen sind denkbar, beispielsweise als fixierbare textile Flächengebilde bei Heimtextilien wie Polstermöbeln, verstärkten Sitzkonstruktionen, Sitzbezügen oder als fixierbares und dehnfähiges textiles Flächengebilde in der Automobilausstattung, bei Schuhkomponenten oder im Bereich Hygiene/Medikal.

Nachfolgend wird die Erfindung ohne Beschränkung der Allgemeinheit anhand zweier Beispiele beschrieben:

### Beispiel 1:

Eine Vliesstoffbasis aus 100 % Polyester mit einem Flächengewicht von 36 g/m² wurde nach dem Doppelpunktverfahren beschichtet. Dabei wurde für den Unterpunkt eine Paste eingesetzt, die neben den herkömmlichen Hilfstoffen, wie Emulgatoren, Verdicker und Prozeßhilfsmittel ein thermoplastisches Polyolefin (Polypropylen) mit einem MFI-Wert > 50 g/10min bei 190 °C und 2,16 kg Belastung und einem Schmelzpunkt von 160 °C enthielt. Als Streupulver für den Oberpunkt wurde auf ein thermoplastisches Polyolefin(Polypropylen) mit einem MFI-Wert < 50 g/10min bei 190 °C und 2,16 kg Belastung und einem Schmelzpunkt von 136 °C zurückgegriffen. Im Beschichtungsprozeß wurden 5 g/m² Unterpunktpaste und 10 g/m² Streupulver aufgetragen. Die Fixierung der Einlage zu einem Woll- und einem Baumwolloberstoff wurde anschließend bei 165 °C (Fugentemperatur 140 °C) für 20 sec. und 3 bar vorgenommen.

Zum Vergleich wurde die gemäß Beispiel 2 der DE 10 2005 06 470 A1 hergestellte Einlage bei 165 °C - und nicht wie vorgeschrieben bei 180 °C - (Fugentemperatur 160 °C) fixiert.

Beide Einlagenproben wurden dem sogenannten Frost-Prozeß unterzogen (siehe WO 2007/088115).

In Tabelle 1 sind die Trennkraftwerte auf Wolle und Baumwolle vor und nach dem Frost-Prozeß dargestellt

**Tabelle 1:**

| Material | Oberstoff | Trennkraft vor Frost-Prozeß [N/5cm] | Trennkraft nach Frost-Prozeß [N/5cm] |
|---|---|---|---|
| Erfindungsgemäßes Haftmassensystem | Wolle | 15,8 | 16,8 |
| Erfindungsgemäßes Haftmassensystem | Baumwolle | 7,1 | 11,7 |
| Haftmassensystem gemäß Beispiel 2 der DE 10 2005 06 470 A1 | Wolle | 0 | 0 |
| Haftmassensystem gemäß Beispiel 2 der DE 10 2005 06 470 A1 | Baumwolle | 0 | 0 |

Es zeigt sich dass die erfindungsgemäße Einlage auch nach dem Frostprozess sehr gute Trennkraftwerte zeigt. Dagegen kann mit dem Haftmassesystem aus dem Stand der Technik bei den gewählten Fixiertbedingungen keine Fixierung des Oberstoffs erreicht werden.

### Beispiel 2:

Eine Vliesstoffbasis aus 100 % Baumwolle mit einem Flächengewicht von 130 g/m² wurde nach dem Doppelpunktverfahren beschichtet. Dabei wurde für den Unterpunkt eine Paste eingesetzt, die neben den herkömmlichen Hilfstoffen, wie Emulgatoren, Verdicker und Prozeßhilfsmittel ein thermoplastisches Polyolefin (Polypropylen) mit eine MFI-Wert > 50 g/10min bei 190 °C und 2,16 kg Belastung und einem Schmelzpunkt von 160 °C enthielt. Als Streupulver für den Oberpunkt wurde auf ein thermoplastisches Polyolefin (Polypropylen) mit einem MFI-Wert < 50 g/10min bei 190 °C und 2,16 kg Belastung und einem Schmelzpunkt von 136 °C zurückgegriffen. Im Beschichtungsprozeß wurden 12 g/m² Unterpunktpaste und 20 g/m² Streupulver aufgetragen. Die Fixierung der Einlage zu einem TOPAS Oberstoff (50 % Baumwolle und 50 % Polyester) und einem Hemdenpopeline Oberstoff (50 % Baumwolle und 50 % Polyester) wurde anschließend bei 160 °C für 26 sec. und 1 bar vorgenommen. Auf diesen Oberstoffen wird bei dem am Markt üblichen Haftmassensystemen mindestens bei 180 °C fixiert. Anschließend wurde der Verbund mit dem TOPAS Oberstoff 10 x Zyklen mit einem stark alkalischen Waschmittel für Industriewäscheanwendungen bei 90 °C gewaschen und jeweils bei 155 °C für 8 min. im Ofen getrocknet. Der Verbund mit dem Hemdenpopeline Oberstoff wurde 25 Zyklen einer Industriewäsche unterzogen mit Trocknung im Tunnelfinisher.

In Tabelle 2 sind die Trennkraftwerte vor und nach der jeweiligen Wäsche dargestellt.

**Tabelle 2:**

| Material | Oberstoff | Trennkraft vor 10x90°C [N/5cm] | Trennkraft nach 10x90°C [N/5cm] | Trennkraft vor Mietwäscheprozeß [N/5cm] | Trennkraft nach Mietwäscheprozeß [N/5cm] |
|---|---|---|---|---|---|
| Erfindunqsqemäße Haftmassensvstem | TOPAS | 13 | 24,1 | | |
| Erfindungsgemäßes Haftmassensvstem | Hemdenpopeline | | | 12,2 | 10,0 |

Es konnte gezeigt werden, dass mit dem erfindungsgemäßen Haftmassesystem beschichtete Einlagevliesstoffe sich durch eine hohe Waschbeständigkeit auch bei Industriewaschprozessen auszeichnen.

## Patentansprüche

1. Thermisch fixierbares Flächengebilde, insbesondere verwendbar als fixierbarer Einlagestoff in der Textilindustrie mit einer Trägerlage aus einem textilen Material, auf welcher eine zweilagige Haftmassenstruktur, umfassend eine unmittelbar auf dem Flächengebilde aufliegende Unterschicht sowie eine auf der Unterschicht angeordnete Oberschicht aufgebracht ist, wobei die Unterschicht einen ersten Schmelzklebstoff enthält und die Oberschicht einen zweiten Schmelzklebstoff, **dadurch gekennzeichnet, dass** der erste Schmelzklebstoff einen Schmelzpunkt > 140°C und einen Melt-Flow-Index (MFI)-Wert von > 50g/10 Minuten (190°C /2,16 kg) aufweist und der zweite Schmelzklebstoff einen Schmelzpunkt < 145°C und einen MFI-Wert von < 50 (190°C /2,16 kg) aufweist.

2. Thermisch fixierbares Flächengebilde nach Anspruch 1, **dadurch gekennzeichnet, dass** der zur Ausbildung der Oberschicht eingesetzte zweite Schmelzklebstoff einen Schmelzpunkt von 90 °C bis 145 °C und einen MFI-Wert von 2 bis 50 g/10 Minuten (190°C /2,16 kg) aufweist.

3. Thermisch fixierbares Flächengebilde nach Anspruch 1 oder 2, **dadurch gekennzeichnet, dass** der zweite Schmelzklebstoff Polyolefin, Polyurethan, Polyester, Ethylenvinylacetat und/oder Polyamid in einer Menge von 0,1 bis 30 g/m² enthält.

4. Thermisch fixierbares Flächengebilde nach Anspruch 3, **dadurch gekennzeichnet, dass** der zweite Schmelzklebstoff Polyolefin, insbesondere Polypropylen, in einer Menge von 0,1 bis 30 g/m² enthält.

5. Thermisch fixierbares Flächengebilde nach Anspruch 4, **dadurch gekennzeichnet, dass** der zweite Schmelzklebstoff Polyolefin enthält, welches in Abmischung ein Polyolefincopolymer, vorzugsweise mit einem Schmelzpunkt von 90°C bis 145°C und einem MFI von 10 bis 160 g/10 Minuten (190°C /2,16 kg), vorzugsweise von von 20 bis 80 g/10 Minuten (190°C /2,16 kg) in einer Menge von 2 - 98 Gew.%, vorzugsweise von 2 - 50 Gew.%, bezogen auf die Gesamtmenge an Polyolefin in der Oberschicht aufweist.

6. Thermisch fixierbares Flächengebilde nach einem oder mehreren der Ansprüche 1 bis 5, **dadurch gekennzeichnet, dass** der erste Schmelzklebstoff einen Schmelzpunkt von 140°C bis 200°C besitzt.

7. Thermisch fixierbares Flächengebilde nach einem oder mehreren der Ansprüche 1 bis 6, **dadurch gekennzeichnet, dass** der erste Schmelzklebstoff einen MFI im Bereich von 51 g/10 Minuten (190°C /2,16 kg) bis 160 g/10 Minuten (190°C /2,16 kg) besitzt.

8. Thermisch fixierbares Flächengebilde nach einem der Ansprüche 1 bis 7, **dadurch gekennzeichnet, dass** der erste Schmelzklebstoff Polyolefin, Polyamid, Polyurethane, Ethylenvinylacetat und/oder Polyester enthält.

9. Thermisch fixierbares Flächengebilde nach Anspruch nach einem oder mehreren der Ansprüche 1 bis 8, **dadurch gekennzeichnet, dass** der erste Schmelzklebstoff Polypropylen in einer Menge von 50 bis 100 Gew.% enthält.

10. Thermisch fixierbares Flächengebilde nach nach einem oder mehreren der Ansprüche 1 bis 9, **dadurch gekennzeichnet, dass** das Verhältnis der Massen des ersten und des zweiten Schmelzklebstoffs 5:1 bis 1:5 beträgt.

11. Thermisch fixierbares Flächengebilde nach nach einem oder mehreren der Ansprüche 1 bis 10, **dadurch gekennzeichnet, dass** die zur Herstellung der Oberschicht eingesetzten Pulverpartikel eine Korngrößenverteilung aufweisen, in der der Anteil der Fraktion im Bereich von 0 bis 80 µm von 0 bis 20 Gew.%, vorzugsweise von 5 bis 15 Gew.% beträgt und der Anteil der Fraktion im Bereich von 160 bis 200 µm von 5 bis 40 Gew.%, vorzugsweise von 10 bis 25 Gew.% und der Anteil der Fraktion im Bereich von über 200 µm von 20 bis 70 Gew.%, vorzugsweise von 30 bis 60 Gew.% beträgt.

12. Verfahren zur Herstellung eines thermisch fixierbaren Flächengebildes nach einem oder mehreren der vorangehenden Ansprüche umfassend die Schritte:
a) Herstellung eines textilen Flächengebildes durch eine textile Flächenbildungstechnik,
b) Auftragen einer Schicht eines ersten Schmelzklebstoffs auf das textile Flächengebilde und
c) Auftragen einer Schicht eines zweiten Schmelzklebstoffs auf das textile Flächengebilde, so dass sich eine
d) Schicht aus dem zweiten Schmelzklebstoff über der Schicht eines ersten Schmelzklebstoff ausbildet, wobei als erste und zweite Schmelzklebstoff solche gemäß Anspruch 1 eingesetzt werden.

13. Verfahren nach Anspruch 12, **dadurch gekennzeichnet, dass** in einem ersten Schritt eine vorzugsweise wässrige Dispersion des ersten Schmelzklebstoffs auf das textile Flächengebilde in Form eines regelmäßigen oder vorzugsweise irregulären Musters aufgetragen wird, in einem zweiten Schritt ein Pulver eines zweiten Schmelzklebstoffs auf das textile Flächengebilde aufgestreut wird, das an den Stellen des ersten Schmelzklebstoffs an der Dispersion kleben bleibt und von den übrigen Stellen der Oberfläche des textilen Flächengebildes durch Absaugen entfernt wird und dass in einer nachfolgenden thermischen Behandlung der erste und zweite Schmelzklebstoff als übereinanderliegende Schichten fixiert werden.

14. Verfahren nach Anspruch 13, **dadurch gekennzeichnet, dass** die Dispersion des ersten Schmelzklebstoffs bei 20°C eine Viskosität von mindestens 10 000 mPas vorzugsweise von 20 000 mPas bis 60 000 mPas, noch bevorzugter von 35 000 mPas bis 50 000 mPas aufweist.

15. Verfahren nach nach einem oder mehreren der Ansprüche 12 bis 14, **dadurch gekennzeichnet, dass** das mit den Schmelzklebstoffen beschichtete Flächengebilde einem Färbungsprozess zur Ausbildung eines unregelmäßigen Farbmusters, vorzugsweise mittels dem FrostVerfahren, unterzogen wird.

16. Verwendung eines thermisch fixierbaren Flächengebildes nach einem oder mehreren der Ansprüche 1 bis 11 als Einlagestoff und/oder als Futterstoff für die Herstellung von Mietwäsche.

17. Verwendung eines textilen Flächengebildes nach Anspruch 16 als Verfestigungseinlage oder Verstärkungseinlage von Kragen- und Manschetten von Berufsbekleidung.

## Claims

1. Thermally fusible sheet material, for use in particular as a fusible interlining in the textile industry, having a support layer made from a textile material to which is applied a two-layer adhesive composition structure comprising an underlayer lying directly on the sheet material and an overlayer disposed upon the underlayer, the underlayer containing a first hot-melt adhesive and the overlayer containing a second hot-melt adhesive, **characterized in that** the first hot-melt adhesive has a melting point of > 140°C and a melt flow index (MFI) value of > 50 g/10 minutes (190°C/2.16 kg) and the second hot-melt adhesive has a melting point of < 145°C and an MFI value of < 50 (190°C/2.16 kg).

2. Thermally fusible sheet material according to Claim 1, **characterized in that** the second hot-melt adhesive used to form the overlayer has a melting point of 90°C to 145°C and an MFI value of 2 to 50 g/10 minutes (190°C/2.16 kg).

3. Thermally fusible sheet material according to Claim 1 or 2, **characterized in that** the second hot-melt adhesive contains polyolefin, polyurethane, polyester, ethylene vinyl acetate and/or polyamide in an amount from 0.1 to 30 g/m².

4. Thermally fusible sheet material according to Claim 3, **characterized in that** the second hot-melt adhesive contains polyolefin, in particular polypropylene, in an amount from 0.1 to 30 g/m².

5. Thermally fusible sheet material according to Claim 4, **characterized in that** the second hot-melt adhesive contains polyolefin, which in a mixture a polyolefin copolymer, preferably has with a melting point of 90°C to 145°C and an MFI of 10 to 160 g/10 minutes (190°C/2.16 kg), preferably 20 to 80 g/10 minutes (190°C/2.16 kg), in an amount from 2 to 98 wt.%, preferably 2 to 50 wt.%, relative to the total amount of polyolefin in the overlayer.

6. Thermally fusible sheet material according to one or more of Claims 1 to 5, **characterized in that** the first hot-melt adhesive has a melting point of 140°C to 200°C.

7. Thermally fusible sheet material according to one or more of Claims 1 to 6, **characterized in that** the first hot-melt adhesive has an MFI in the range from 51 g/10 minutes (190°C/2.16 kg) to 160 g/10 minutes (190°C/2.16 kg).

8. Thermally fusible sheet material according to one or more of Claims 1 to 7, **characterized in that** the first hot-melt adhesive contains polyolefin, polyamide, polyurethane, ethylene vinyl acetate and/or polyester.

9. Thermally fusible sheet material according to one or more of Claims 1 to 8, **characterized in that** the first hot-melt adhesive contains polypropylene in an amount from 50 to 100 wt.%.

10. Thermally fusible sheet material according to one or more of Claims 1 to 9, **characterized in that** the mass ratio of the first to the second hot-melt adhesive is 5:1 to 1:5.

11. Thermally fusible sheet material according to one or more of Claims 1 to 10, **characterized in that** the powder particles used to produce the overlayer have a particle size distribution in which the content of the fraction in the range from 0 to 80 µm is from 0 to 20 wt.%, preferably from 5 to 15 wt.%, and the content of the fraction in the range from 160 to 200 µm is from 5 to 40 wt.%, preferably from 10 to 25 wt.%, and the content of the fraction in the range above 200 µm is from 20 to 70 wt.%, preferably from 30 to 60 wt.%.

12. Method of producing a thermally fusible sheet material according to one or more of the preceding claims, comprising the following steps:
a) producing a textile sheet material by means of a textile sheeting method,
b) applying a layer of a first hot-melt adhesive to the textile sheet material and
c) applying a layer of a second hot-melt adhesive to the textile sheet material, such that a
d) layer of the second hot-melt adhesive forms on top of the layer of a first hot-melt adhesive, adhesives such as those according to Claim 1 being used as the first and second hot-melt adhesive.

13. Method according to Claim 12, **characterized in that** in a first step a preferably aqueous dispersion of the first hot-melt adhesive is applied to the textile sheet material in the form of a regular or preferably irregular pattern, in a second step a powder of a second hot-melt adhesive is scattered over the textile sheet material, which powder adheres to the dispersion at the locations of the first hot-melt adhesive and is removed by suction from the other locations on the surface of the textile sheet material, and **in that** in a subsequent thermal treatment the first and second hot-melt adhesives are fused as superimposed layers.

14. Method according to Claim 13, **characterized in that** the dispersion of the first hot-melt adhesive has a viscosity at 20°C of at least 10,000 mPas, preferably 20,000 mPas to 60,000 mPas, even more preferably 35,000 mPas to 50,000 mPas.

15. Method according to one or more of Claims 12 to 14, **characterized in that** the sheet material coated with the hot-melt adhesives undergoes a dyeing process to form an irregular colour pattern, preferably by means of the freezing process.

16. Use of a thermally fusible sheet material according to one or more of Claims 1 to 11 as an interlining and/or as a lining for the manufacture of rental clothing.

17. Use of a textile sheet material according to Claim 16 as a stiffening interlining or reinforcing interlining for collars and cuffs of work clothing.

## Revendications

1. Structure plane fixable thermiquement, en particulier utilisable en tant qu'entoilage fixable dans l'industrie textile, comportant une couche de support en un matériau textile, sur lequel est appliquée une structure bicouche de matière adhérente, comprenant une couche inférieure reposant directement sur la structure plane ainsi qu'une couche supérieure disposée sur la couche inférieure, la couche inférieure contenant un premier adhésif fusible et la couche supérieure contenant un second adhésif fusible, **caractérisée en ce que** le premier adhésif fusible présente un point de fusion > 140 °C et un indice de fluidité à chaud (MFI) de > 50 g/10 minutes (190 °C/2,16 kg) et le second adhésif fusible présente un point de fusion < 145 °C et un indice MFI de < 50 (190 °C/2,16 kg).

2. Structure plane fixable thermiquement selon la revendication 1, **caractérisée en ce que** le second adhésif fusible utilisé pour la formation de la couche supérieure présente un point de fusion de 90 °C à 145 °C et un indice MFI de 2 à 50 g/10 minutes (190 °C/2,16 kg).

3. Structure plane fixable thermiquement selon la revendication 1 ou 2, **caractérisée en ce que** le second adhésif fusible contient une polyoléfine, un polyuréthane, un polyester, de l'éthylène-acétate de vinyle et/ou un polyamide en une quantité de 0,1 à 30 g/m².

4. Structure plane fixable thermiquement selon la revendication 3, **caractérisée en ce que** le second adhésif fusible contient une polyoléfine, en particulier du polypropylène, en une quantité de 0,1 à 30 g/m².

5. Structure plane fixable thermiquement selon la revendication 4, **caractérisée en ce que** le second adhésif fusible contient une polyoléfine qui, en mélange un copolymère de polyoléfine, présente de préférence avec un point de fusion de 90 °C à 145 °C et un indice MFI de 10 à 160 g/10 minutes (190 °C/2,16 kg), de préférence de 20 à 80 g/10 minutes (190 °C/2,16 kg), en une quantité de 2 - 98 % en poids, de préférence de 2 - 50 % en poids, par rapport à la quantité totale de polyoléfine dans la couche supérieure.

6. Structure plane fixable thermiquement selon une ou plusieurs des revendications 1 à 5, **caractérisée en ce que** le premier adhésif fusible présente un point de fusion de 140 °C à 200 °C.

7. Structure plane fixable thermiquement selon une ou plusieurs des revendications 1 à 6, **caractérisée en ce que** le premier adhésif fusible présente un indice MFI dans la plage de 51 g/10 minutes (190 °C/2,16 kg) à 160 g/10 minutes (190 °C/2,16 kg).

8. Structure plane fixable thermiquement selon la revendication selon l'une quelconque des revendications 1 à 7, **caractérisée en ce que** le premier adhésif fusible contient une polyoléfine, un polyamide, un polyuréthane, de l'éthylène-acétate de vinyle et/ou un polyester.

9. Structure plane fixable thermiquement selon une ou plusieurs des revendications 1 à 8, **caractérisée en ce que** le premier adhésif fusible contient du polypropylène en une quantité de 50 à 100 % en poids.

10. Structure plane fixable thermiquement selon une ou plusieurs des revendications 1 à 9, **caractérisée en ce que** le rapport des masses du premier et du second adhésif fusible vaut de 5:1 à 1:5.

11. Structure plane fixable thermiquement selon une ou plusieurs des revendications 1 à 10, **caractérisée en ce que** les particules de poudre utilisées pour la production de la couche supérieure présentent une distribution granulométrique dans laquelle la proportion de la fraction dans la plage de 0 à 80 µm vaut de 0 à 20 % en poids, de préférence de 5 à 15 % en poids et la proportion de la fraction dans la plage de 160 à 200 µm vaut de 5 à 40 % en poids, de préférence de 10 à 25 % en poids et la proportion de la fraction dans la plage de plus de 200 µm vaut de 20 à 70 % en poids, de préférence de 30 à 60 % en poids.

12. Procédé pour la production d'une structure plane fixable thermiquement selon une ou plusieurs des revendications précédentes, comprenant les étapes :
a) production d'une structure plane textile par une technique de formation de structures planes textiles,
b) application d'une couche d'un premier adhésif fusible sur la structure plane textile et
c) application d'une couche du second adhésif fusible sur la structure plane textile, de sorte qu'il se forme une
d) couche du second adhésif fusible sur la couche d'un premier adhésif fusible, dans lequel on utilise comme premier et second adhésifs ceux selon la revendication 1.

13. Procédé selon la revendication 12, **caractérisé en ce que** dans une première étape on applique sur la structure plane textile une dispersion de préférence aqueuse du premier adhésif fusible, sous forme d'un motif régulier ou de préférence irrégulier, dans une deuxième étape on répand sur la structure plane textile une poudre d'un second adhésif fusible, qui reste collée à la dispersion aux endroits du premier adhésif fusible et est éliminée des autres endroits de la surface de la structure plane textile par aspiration, et **en ce que** dans un traitement thermique subséquent on fixe les premier et second adhésifs sous forme de couches superposées.

14. Procédé selon la revendication 13, **caractérisé en ce que** la dispersion du premier adhésif fusible présente à 20 °C une viscosité d'au moins 10 000 mPa.s, de préférence de 20 000 mPa.s à 60 000 mPa.s. de façon encore plus particulièrement préférée de 35 000 mPa.s à 50 000 mPa.s.

15. Procédé selon une ou plusieurs des revendications 12 à 14, **caractérisé en ce qu'**on soumet la structure plane revêtue avec les adhésifs fusibles à un processus de teinture pour la formation d'un motif coloré irrégulier, de préférence par le procédé de givrage.

16. Utilisation d'une structure plane fixable thermiquement selon une ou plusieurs des revendications 1 à 11 en tant qu'entoilage et/ou en tant que doublure pour la fabrication de linge en location.

17. Utilisation d'une structure plane textile selon la revendication 16 en tant qu'entoilage de consolidation ou entoilage de renforcement de cols et de manchettes de vêtement de travail.
